# EUROPEAN PATENT APPLICATION

(11) **EP 4 524 930 A1**
(43) Date of publication of application: **19.03.2025**
(21) Application number: 23382938.1
(22) Date of filing: 15.09.2023
(51) Int. Cl.: G08G 5/00

(54) **SYSTEMS AND METHODS FOR FLIGHT PLAN VALIDATION AND AUTOMATED ROUTE IMPROVEMENT**

(71) Applicant: The Boeing Company, Arlington, VA 22202 (US)
(72) Inventor: GÜEMES JIMENEZ, Alejandro, 28909 GETAFE (ES); COSTAS ÁLVAREZ, Pablo, 28042 MADRID (ES); LÓPEZ LEONÉS, Javier, 28220 MAJADAHONDA (ES); MUÑOZ HERNÁNDEZ, Andrés, 28042 MADRID (ES); MORALES TIRADO, Elisa, 28045 MADRID (ES)
(74) Representative: ZBM Patents - Zea, Barlocci & Markvardsen

(57) **Abstract**

Systems and methods for flight plan validation and automated route improvement include obtaining flight plan data descriptive of a first plurality of planned flights; obtaining route data describing one or more preconfigured routes; selecting, for each of the first plurality of planned flights, a set of viable routes from the route data; obtaining validation data associated with each viable route for each planned flight of the first plurality of planned flights; based on a determination that no route of the set of viable routes is valid, communicating a request to a route identification service; receiving validated route data describing one or more validated routes associated with the planned flight; and generating a visual indication of a set of confirmed routes for the planned flight.

## Description

### FIELD OF THE DISCLOSURE

The subject disclosure is generally related to systems and methods for flight plan validation and automated route improvement.

### BACKGROUND

With ever increasing air traffic, efficient aircraft management accordingly becomes increasingly important. One aspect of aircraft management includes the generation of an accurate flight plan for each planned flight. Identifying a valid route for an aircraft for the planned flight is a critical piece of the flight planning process.

With the increasing difficulties of modern air traffic, including increased regulatory oversight, as well as omnipresent complex factors such as changing weather and air traffic controller disruptions, flight plan validation has become accordingly complex while the timeline to create a flight plan-and have that flight plan approved-have remained constant or shrunk. Inefficient flight planning procedures lead to increases in airlines' operation-control-center ("OCC") workload, as well as an increase in delay risk due to air navigation service providers ("ANSPs") rejecting submitted flight plans or imposing undesired rerouting. Reducing the amount of flight plans rejected for including invalid routes can increase the operational efficiencies of airlines' OCC by, for example, reducing fuel consumption of the affected aircraft, reducing flight time, reducing delay time, etc.

### SUMMARY

In a particular implementation, a device includes one or more processors configured to obtain flight plan data descriptive of a first plurality of planned flights, wherein the flight plan data includes, for each of the first plurality of planned flights, an origin point, a destination point, and at least one of a departure time and an arrival time. The one or more processors are also configured to obtain route data describing one or more preconfigured routes. The one or more processors are also configured to select, for each of the first plurality of planned flights, a set of viable routes from the route data, wherein a viable route has a first waypoint corresponding to the origin point of a planned flight of the first plurality of planned flights and a second waypoint corresponding to the destination point of the planned flight. The one or more processors are also configured to obtain validation data associated with each viable route for each planned flight of the first plurality of planned flights. The one or more processors are also configured to generate an indication associated with each of the first plurality of flights, wherein the indication for a particular flight of the first plurality of flights identifies whether one or more routes of the set of viable routes are valid based at least on the validation data. The one or more processors are also configured to, based on a determination that no route of the set of viable routes is valid, communicate a request to a route identification service, the request including flight plan data associated with the planned flightand receive validated route data associated with the planned flight from the route identification service, wherein the validated route data describes one or more validated routes associated with the planned flight. The one or more processors are also configured to generate a visual indication of a set of confirmed routes for the planned flight, the set of confirmed routes including routes of the set of viable routes for which the validation data indicates a route of the set of viable routes is valid and including the one or more validated routes.

In another particular implementation, a method includes obtaining flight plan data descriptive of a first plurality of planned flights, wherein the flight plan data includes, for each of the first plurality of planned flights, an origin point, a destination point, and at least one of a departure time and an arrival time. The method also includes obtaining route data describing one or more preconfigured routes. The method also includes selecting, for each of the first plurality of planned flights, a set of viable routes from the route data, wherein a viable route has a first waypoint corresponding to the origin point of a planned flight of the first plurality of planned flights and a second waypoint corresponding to the destination point of the planned flight. The method also includes obtaining validation data associated with each viable route for each planned flight of the first plurality of planned flights. The method also includes generating an indication associated with each of the first plurality of flights, wherein the indication for a particular flight of the first plurality of flights identifies whether one or more routes of the set of viable routes are valid based at least on the validation data. The method also includes, based on a determination that no route of the set of viable routes is valid, communicating a request to a route identification service, the request including flight plan data associated with the planned flight. The method also includes receiving validated route data associated with the planned flight from the route identification service, wherein the validated route data describes one or more validated routes associated with the planned flight. The method also includes generating a visual indication of a set of confirmed routes for the planned flight, the set of confirmed routes including routes of the set of viable routes for which the validation data indicates a route of the set of viable routes is valid and including the one or more validated routes.

In another particular implementation, a non-transitory, computer-readable medium includes instructions that, when executed by one or more processors, cause the processors to obtain flight plan data descriptive of a first plurality of planned flights, wherein the flight plan data includes, for each of the first plurality of planned flights, an origin point, a destination point, and at least one of a departure time and an arrival time. The instructions also cause the processors to obtain route data describing one or more preconfigured routes. The instructions also cause the processors to select, for each of the first plurality of planned flights, a set of viable routes from the route data, wherein a viable route has a first waypoint corresponding to the origin point of a planned flight of the first plurality of planned flights and a second waypoint corresponding to the destination point of the planned flight. The instructions also cause the processors to obtain validation data associated with each viable route for each planned flight of the first plurality of planned flights. The instructions also cause the processors to generate an indication associated with each of the first plurality of flights, wherein the indication for a particular flight of the first plurality of flights identifies whether one or more routes of the set of viable routes are valid based at least on the validation data. The instructions also cause the processors to, based on a determination that no route of the set of viable routes is valid, communicate a request to a route identification service, the request including flight plan data associated with the planned flight. receive validated route data associated with the planned flight from the route identification service, wherein the validated route data describes one or more validated routes associated with the planned flight. The instructions also cause the processors to generate a visual indication of a set of confirmed routes for the planned flight, the set of confirmed routes including routes of the set of viable routes for which the validation data indicates a route of the set of viable routes is valid and including the one or more validated routes.

In another particular implementation, a device includes means for obtaining flight plan data descriptive of a first plurality of planned flights, wherein the flight plan data includes, for each of the first plurality of planned flights, an origin point, a destination point, and at least one of a departure time and an arrival time. The device also includes means for obtaining route data describing one or more preconfigured routes. The device also includes means for selecting, for each of the first plurality of planned flights, a set of viable routes from the route data, wherein a viable route has a first waypoint corresponding to the origin point of a planned flight of the first plurality of planned flights and a second waypoint corresponding to the destination point of the planned flight. The device also includes means for obtaining validation data associated with each viable route for each planned flight of the first plurality of planned flights. The device also includes means for generating an indication associated with each of the first plurality of flights, wherein the indication for a particular flight of the first plurality of flights identifies whether one or more routes of the set of viable routes are valid based at least on the validation data. The device also includes means for, based on a determination that no route of the set of viable routes is valid, communicating a request to a route identification service, the request including flight plan data associated with the planned flight. The device also includes means for receiving validated route data associated with the planned flight from the route identification service, wherein the validated route data describes one or more validated routes associated with the planned flight. The device also includes means for generating a visual indication of a set of confirmed routes for the planned flight, the set of confirmed routes including routes of the set of viable routes for which the validation data indicates a route of the set of viable routes is valid and including the one or more validated routes.

The features, functions, and advantages described herein can be achieved independently in various implementations or can be combined in yet other implementations, further details of which can be found with reference to the following description and drawings.

### BRIEF DESCRIPTION OF THE DRAWINGS

FIG. 1 depicts an example system for flight plan validation and automated route improvement, in accordance with some examples of the subject disclosure.
FIG. 2 depicts an example graphical representation of information associated with a set of confirmed routes for each of a plurality of planned flights, in accordance with some implementations of the subject disclosure.
FIG. 3 depicts an example dashboard interface for a user including a first visual representation of a count of a first set of flights for which all of the set of viable routes are valid, a second visual representation of a count of a second set of flights for which some of the set of viable routes are valid, and a third visual representation of a count of a third set of flights for which none of the set of viable routes are valid, in accordance with some implementations of the subject disclosure.
FIG. 4 is a flow chart of an example method for flight plan validation and automated route improvement, in accordance with some examples of the subject disclosure.
FIG. 5 is a block diagram of a computing environment including a computing device configured to support aspects of computer-implemented methods and computer-executable program instructions (or code), in accordance with some examples of the subject disclosure.

### DETAILED DESCRIPTION

Inefficiencies in the flight planning process can lead to operational inefficiencies for airlines. For example, the relatively short-notice period between a flight plan's rejection reaching the OCC and the planned flight departure may not allow dispatchers to appropriately fix a rejected flight plan. One approach for reducing the inefficiencies in flight planning can include forecasting rerouting and route-based flight plan rejections. Through such forecasting, airlines gain more time to fix a rejected flight plan, dispatchers are provided with alternative routes that meet efficiency and validation requirements, etc.

The systems and methods disclosed herein can be employed by flight dispatchers in their flight plan validation and filing procedures. Dispatchers can, for example, continuously monitor the validity status of all of an airline's routes for a planned schedule and provide alternatives to those flights identified as problematic. Dispatchers can continuously check the status of all the current and planned flights, see which flights need to be fixed (e.g., rerouting, assign different tail, change the departure time or cancel) and continuously improve the company routes and schedules. Using the systems and methods disclosed herein, dispatchers can do this in advance (allowing more time for planning) and in an automated, data-driven manner, allowing for a more efficient process.

A technical advantage of the subject disclosure is the ability to automatically and efficiently validate routes as part of the flight planning process, provide validated routes if none are present in the flight plan, automatically perform this analysis for all routes for an airline's schedule, and provide graphical interface-based insight into the analysis for an airline's operations staff. Improving the flight planning process can result in improved efficiencies of aircraft operations including reduced fuel usage, reduced flight time, reduced wait time, etc.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

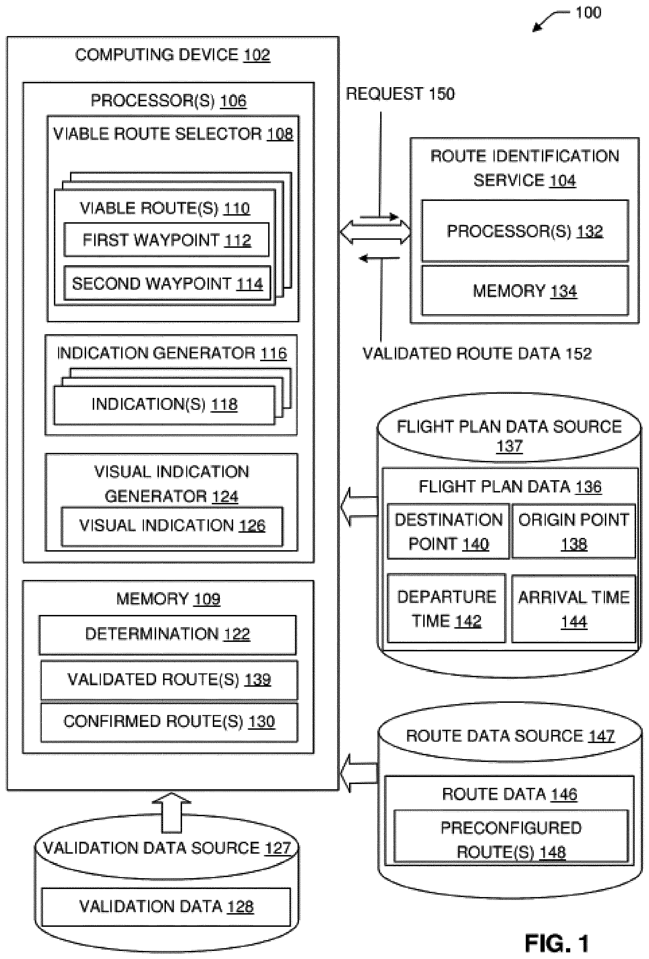

Particular implementations are described herein with reference to the drawings. In the description, common features are designated by common reference numbers throughout the drawings. As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 1 depicts a system 100 including one or more processors ("processor(s)" 106 in FIG. 1), which indicates that in some implementations the system 100 includes a single processor 106 and in other implementations the system 100 includes multiple processors 106. For ease of reference herein, such features are generally introduced as "one or more" features and are subsequently referred to in the singular or optional plural (as indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

FIG. 1 depicts an example system 100 for flight plan validation and automated route improvement, in accordance with some examples of the subject disclosure. In some implementations, the system 100 includes a computing device 102 configured to communicate with one or more route identification services 104, one or more flight plan data sources 137, one or more validation data sources 127, and one or more route data sources 147. The computing device 102 can include one or more processors 106 coupled to a memory 109 that includes instructions that, when executed by the processor(s) 106, cause the processor(s) 106 to execute certain functions such as those detailed below. For example, the processor(s) 106 can be configured to generate a visual indication of a set of confirmed routes 130 for a particular planned flight described by flight plan data 136, where the set of confirmed routes 130 includes a set of viable routes 110 (from the route data 146) that validation data 128 has indicated are valid and can also include one or more validated routes 139 described by validated route data 152 received from the route identification service 104. In a particular aspect, the data descriptive of the validated routes 139 can be stored at the memory 109.

The processor(s) 106 can include one or more components configured to execute one or more of those functions, including a viable route selector 108, an indication generator 116, a visual indication generator 124, or some combination thereof. In some implementations, the processor(s) 106 can be configured to obtain flight plan data 136 from one or more flight plan data sources 137. The flight plan data 136 is descriptive of a first plurality of planned flights, wherein the flight plan data includes, for each of the first plurality of planned flights, an origin point 138, a destination point 140, and at least one of a departure time 142 or an arrival time 144. For example, the flight plan data 136 can describe all of the flights planned by one or more of Airline A and Airline B. A particular planned flight by Airline A can, for example, be described by flight plan data 136 indicating that the particular planned flight is from London Gatwick to Edinburgh on Tuesday, July 18, 2023, departing at 8:00 AM GMT.

The processor(s) 106 can also be configured to obtain route data 146 from one or more route data sources 147 describing one or more preconfigured routes 148. In some implementations, each planned flight can have one or more preconfigured routes 148 associated with it. For example, the exemplary flight mentioned above from London to Edinburgh can have five to ten routes associated therewith. In some implementations, each preconfigured route 148 can include data descriptive of a particular path by which an aircraft can travel from the origin point 138 to the destination point 140.

In some implementations, the viable route selector 108 can be configured to select, for each of the first plurality of planned flights, a set of viable routes 110 from the route data 146, wherein a viable route 110 has a first waypoint 112 corresponding to the origin point 138 of a planned flight of the first plurality of planned flights and a second waypoint 114 corresponding to the destination point 140 of the planned flight. In some aspects, the viable route 110 includes one or more additional waypoints between the first waypoint 112 and the second waypoint 114. For example, the exemplary flight mentioned above can have a first waypoint 112 associated with a portion of the London airport from which the flight is to depart and a second waypoint 114 associated with a portion of the Edinburgh airport to which it plans to fly. Each of the viable routes 110 associated with this flight can include one or more additional waypoints between London and Edinburgh that identify the particular path the aircraft is to fly. The set of viable routes 110 can differ for a particular planned flight in the particular waypoints included between the origin and destination points, altitude, or other flight path parameters.

The processor(s) 106 can also be configured to obtain validation data 128 from one or more validation data sources 127. The validation data 128 is associated with each viable route 110 for each planned flight of the first plurality of planned flights. In some aspects, the validation data 128 can include data indicative of whether a particular viable route 110 is valid at a particular point in time. In a particular aspect, the processor(s) 106 can be configured to check each of the set of viable routes 110 against a route rejection criterion associated with the validation data 128. The route rejection criterion can indicate that, for example, a waypoint of the particular route no longer exists, a standard instrument departure at the origin point is closed traffic is forbidden for a portion of the particular route, traffic is closed for a portion of the particular route, a portion of the particular route cannot be flown at a desired flight level, etc. The validation data 128 can include data indicating whether a particular route is valid, a window during which the particular route is valid (or invalid), one or more reasons why a particular route is valid (or invalid), or some combination thereof.

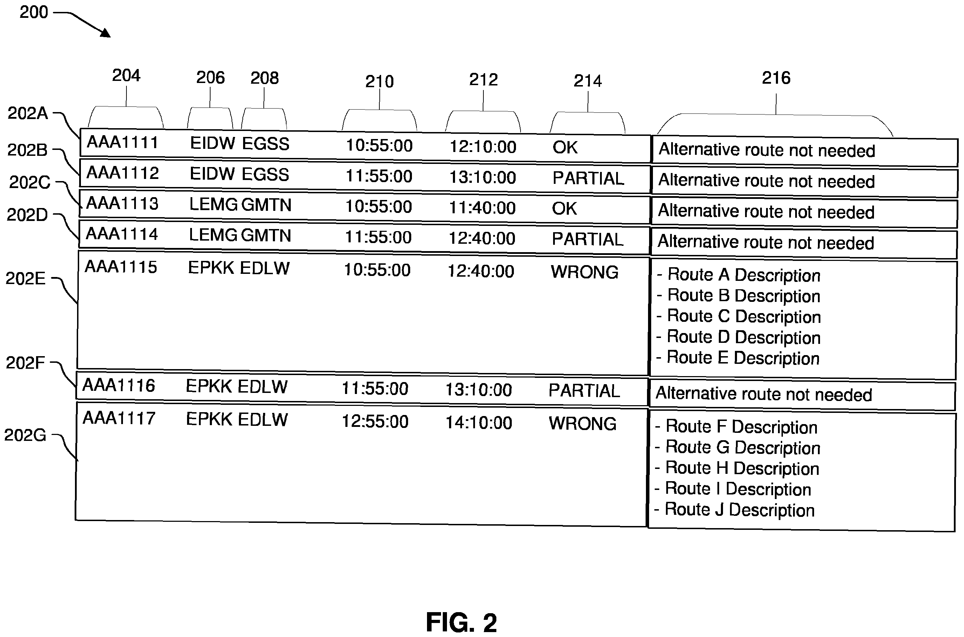

The processor(s) 106 can be configured to use the validation data 128 to determine whether one or more of the set of viable routes 110 for a particular planned flight are acceptable for the purposes of flight planning. In some implementations, the indication generator 116 can be configured to generate an indication 118 associated with each of the first plurality of planned flights, wherein the indication 118 for a particular planned flight of the first plurality of planned flights identifies whether one or more routes of the set of viable routes 110 are valid based at least on the validation data 128. The indication 118 can include, for example a text-based indication (e.g., "OK," "PARTIAL," "WRONG," etc.), a graphical-based indication (e.g., one of a multicolor indication scheme), other appropriate indication, or some combination thereof. An exemplary indication 118 is illustrated below with reference to route indication 214 of FIG. 2.

In a particular aspect, the indication 118 can include one or more visual indications. For example, the indication 118 can include a first color indicating that all of the one or more routes are valid, a second color indicating that some of the one or more routes are valid, a third color indicating that none of the one or more routes is valid, or some combination thereof.

In some implementations, the processor(s) 106 can also be configured to, based on a determination 122 that no route of the set of viable routes 110 is valid, communicate a request 150 to the route identification service 104, the request 150 including a portion of the flight plan data 136 associated with the planned flight. The determination 122 can include data indicative of, for example, a yes/no decision by the processor(s) 106 that no route of the set of viable routes 110 is valid. For example, the processor(s) 106 can be configured to first make a determination 122 that no route of the set of viable routes 110 is valid and, if the determination 122 indicates that no route is valid, communicate the request 150 to the route identification service 104, where the request 150 includes the origin point 138, destination point 140, and departure time 142 of a particular planned flight.

The route identification service 104 can be configured to process the request 150 (e.g., by one or more processors 132 coupled to a memory 134) to determine one or more validated routes 139 associated with the particular planned flight and return validated route data 152 describing the one or more validated routes 139 to the computing device 102. The validated route data 152 can include data indicative of a route that the route identification service 104 has indicated is valid. The validated route data 152 can include, for example, data indicative of a first waypoint corresponding to the origin point and a second waypoint corresponding to the destination point for a particular planned flight. In some aspects, the route identification service 104 can be any appropriate electronic device configured to receive the request 150 and return the validated route data 152 as described above. For example, the route identification service 104 can be a software-as-a-service or application programming interface provided to a backend service configured to provide the validated route data 152.

The processor(s) 106 can also be configured to receive the validated route data 152 associated with the planned flight from the route identification service 104, wherein the validated route data 152 describes one or more validated routes 139 associated with the planned flight.

In some implementations, the visual indication generator 124 can be configured to generate a visual indication 126 of a set of confirmed routes 130 for the planned flight, the set of confirmed routes 130 including routes of the set of viable routes 110 for which the validation data 128 indicates a route of the set of viable routes 110 is valid and including the one or more validated routes 139 when validated routes 139 were indicated by the request 150 and the validated route data 152. As described in more detail below with reference to FIGS. 2-5, the visual indication 126 can include one or more graphical representations of the automated analysis of the set of viable routes 110 associated with a particular planned flight. For example, the visual indication 126 can include a graphical list of the set of confirmed routes 130 for display on an input/output portion of the computing device 102.

In some aspects, the processor(s) 106 can be further configured to generate additional information associated with the set of confirmed routes 130. In a particular aspect, the processor(s) 106 can be configured to generate one or more key performance indicators for each of the set of confirmed routes 130. The key performance indicators can include, for example, a fuel usage metric, a departure time delay metric, etc.

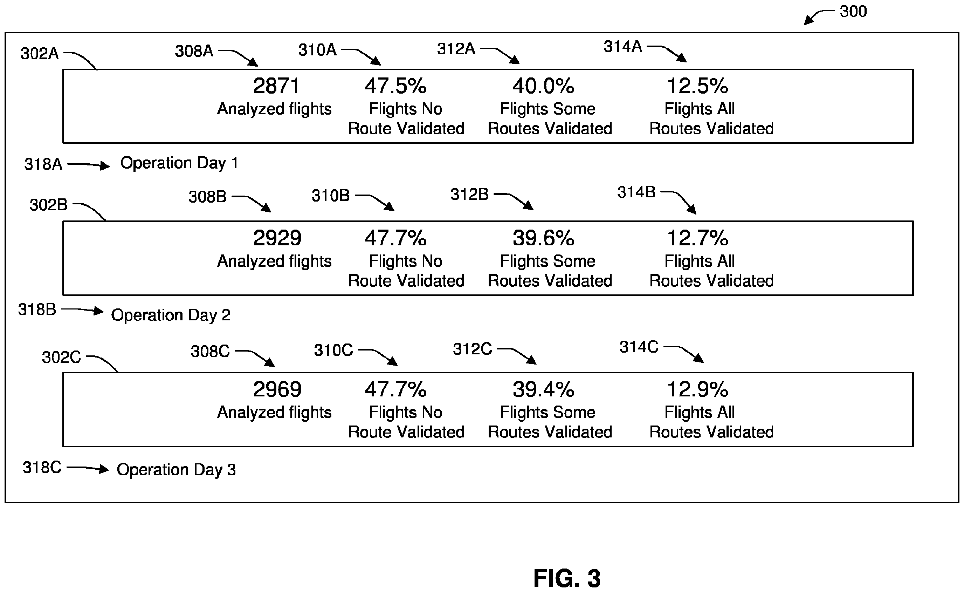

In some aspects, the processor(s) 106 can also be configured to generate a dashboard interface for a user, the dashboard interface including one or more visual representations associated with the validation data 128 of each of the one or more routes for each of the first plurality of planned flights. As illustrated below with reference to FIG. 3, for example, the one or more visual representations can include a visual representation of a count of a first set of flights for which all of the set of viable routes 110 are valid, a count of a second set of flights for which some of the set of viable routes 110 are valid, and a count of flights for which none of the set of viable routes 110 are valid.

In the same or alternative aspects, the processor(s) 106 can also be configured to communicate a message including a text explanation associated with the validation data 128. As illustrated below with reference to additional information 216 of FIG. 2 below, for example, a message can include a text explanation associated with an analysis of the one or more routes associated with a particular planned flight (e.g., "Alternative route not needed," a text description of alternative routes, etc.).

Although the structure and function of the computing device 102 detailed above has been described with reference to a single set of flights, the systems and methods described can be applied to a plurality of sets of flights without departing from the scope of the subject disclosure. For example, the first plurality of flights can be associated with a first airline, and the processor(s) 106 can be configured to obtain flight plan data 136 indicating a second plurality of flights associated with a second airline, each of the second plurality of flights including an origin point 138, a destination point 140, and at least one of a departure time 142 and an arrival time 144; select, for each of the second plurality of planned flights, a second set of viable routes 110 from the route data 146, wherein a viable route 110 has a first waypoint 112 corresponding to the origin point 138 of a planned flight of the second plurality of planned flights and a second waypoint 114 corresponding to the destination point 140 of the planned flight of the second plurality of planned flights; obtain validation data 128 associated each viable route 110 for each planned flight of the second plurality of planned flights; generate an indication 118 associated with each of the second plurality of flights, wherein the indication 118 for a particular flight of the second plurality of flights identifies whether one or more routes of the set of viable routes 110 are valid based at least on the validation data 128; based on a determination 122 that no route of the second set of viable routes 110 is valid, communicate a request 150 to the route identification service 104, the request 150 including flight plan data 136 associated with the planned flight of the second plurality of planned flights; receive validated route data 152 associated with the planned flight of the second plurality of planned flights from the route identification service 104, wherein the validated route data 152 describes one or more validated routes 139 associated with the planned flight of the second plurality of planned flights; and generate a visual indication 126 of a second set of confirmed routes for the planned flight of the second plurality of planned flights, the set of confirmed routes 130 including routes of the set of viable routes 110 for which the validation data 128 indicates a route of the second set of viable routes 110 is valid and including the one or more validated routes 139 associated with the second plurality of planned flights.

The processor(s) 106 can also be configured to generate the dashboard interface for a user, where the dashboard interface includes one or more visual representations associated with the validation data 128 of each of the one or more routes for each of the first plurality of flights and each of the second plurality of flights. In a particular aspect, the dashboard interface can include one or more visual representations comparing the validation data 128 associated with the first plurality of flights to the validation data 128 associated with the second plurality of flights.

In some implementations, the computing device 102, route identification service 104, flight plan data source 137, route data source 147, validation data source 127, or some combination thereof can be associated with, integrated into, or otherwise included in a flight dispatcher system. In such implementations, the processor(s) 106 can also be configured to submit the request 150 to an air traffic control approval system. The air traffic control approval system can be configured to provide the validated route data 152. Obtaining an accurate, data-driven set of confirmed routes 130 can improve the efficiency of the air traffic control approval system.

The system 100 can also include components not illustrated in FIG. 1. For example, the computing device 102 can also include a receiver configured to receive the validated route data 152, the flight plan data 136, the route data 146, the validation data 128, or some combination thereof. The receiver can be configured to receive the data, for example, via a radio frequency link. As an additional example, the system 100 can also include one or more input/output interfaces, one or more network interfaces, etc. Further, although FIG. 1 illustrates the memory 109 of the system 100 as storing certain data, more, fewer, and/or different data can be present within the memory 109 without departing from the scope of the subject disclosure.

Additionally, although FIG. 1 illustrates certain operations occurring within the computing device 102, these operations can be performed by other components of the system 100 without departing from the scope of the subject disclosure. For example, one or more components external to the computing device 102 can be configured to host or otherwise incorporate some or all of the viable route selector 108, the indication generator 116, the visual indication generator 124, or some combination thereof. Such component(s) can be located remotely from the computing device 102 and accessed via a modem of the computing device 102. As a particular example, the determination 122, the confirmed route(s) 130, or some combination thereof can be stored in one or more databases external to the computing device 102.

Further, although FIG. 1 illustrates the computing device 102 and the route identification service(s) 104 as separate, other configurations are possible without departing from the scope of the subject disclosure. For example, the computing device 102 and the route identification service 104 can be integrated into an air traffic control approval system, a flight planning system, etc. As an additional example, one or more components of the computing device 102 can be distributed across a plurality of computing devices (e.g., a group of servers). Additionally, although FIG. 1 illustrates the flight plan data source 137, the route data source 147, and the validation data source 127 as separate from the computing device, one or more of these data sources can be integrated with one another, with the computing device 102, or some combination thereof without departing from the scope of the subject disclosure. For example, the flight plan data source 137, route data source 147, and validation data source 127 can be integrated into a single database that can be integrated into and/or in communication with the computing device 102.

FIG. 2 depicts an example graphical representation 200 of information associated with a set of confirmed routes (e.g., the confirmed routes 130 of FIG. 1) for each of a plurality of planned flights, in accordance with some implementations of the subject disclosure. The graphical representation 200 includes one or more rows 202, with each row 202 associated with a particular planned flight. In each row 202, a plurality of information fields provides additional information for the planned flight. In the illustrative example of FIG. 2, the information fields include a flight number 204, origin airport code 206, destination airport code 208, departure time 210, arrival time 212, route indication 214, and additional information 216. Generally, the route indication 214 is an exemplary implementation of the indication 118 of FIG. 1, as described in more detail above.

In the example graphical representation 200, the origin airport code 206 provides language indicating the origin airport associated with a particular planned flight (e.g., the origin point 138 of FIG. 1). The code might include, for example, the three-letter code provided for an airport by the International Air Transport Association, the four-letter code provided for the airport by the International Civil Aviation Organization, some other language identifying the origin airport, or some combination thereof. In a similar manner, the destination airport code 208 identifies the intended destination airport for a particular planned flight (e.g., the destination point 140 of FIG. 1). The departure time 210 and arrival time 212 can indicate the planned departure time (e.g., the departure time 142) and arrival time (e.g., the arrival time 144), respectively, for a particular planned flight.

In the example graphical representation 200, the route indication 214 provides a text-based indication of whether one or more preconfigured routes associated with a particular planned flight are valid. For example, the route indication 214 for row 202A recites "OK," indicating that all of the preconfigured routes associated with flight AAA1111 are valid. The route indication 214 for row 202B recites "PARTIAL," indicating that at least one of the preconfigured routes associated with flight AAA1112 are valid. The route indication 214 for row 202E recites "WRONG," indicating that none of the preconfigured routes associated with flight AAA1115 are valid. As described in more detail above with reference to FIG. 1, the indication 118 for a particular planned flight identifies whether one or more routes of the set of viable routes 110 are valid based at least on the validation data 128 received from the validation data source 127. The route indication 214 can present the indication 118 in a manner more readily understandable by a human user of the graphical representation 200, the computing device 102, etc.

In the example graphical representation 200, the additional information 216 includes a text explanation associated with the route indication 214. For example, the additional information 216 includes the text explanation "Alternative route not needed" for rows 202A-202D, 202F. This text explanation is provided when the route indication 214 recites either "OK" or "PARTIAL." In these circumstances, the particular planned flight has at least one valid preconfigured route, so no additional routes are needed. When the route indication recites "WRONG," i.e., all of the preconfigured routes for a particular flight are invalid, the additional information 216 includes a description for one or more alternative routes that can be used for the particular planned flight. For example, the additional information 216 for row 202E includes a description of Route A, Route B, Route C, Route D, and Route E for flight AAA1115.

Although the example graphical representation 200 includes particular information presented in a particular order, more, less, and/or different information presented in a different manner can be used without departing from the scope of the subject disclosure. For example, the graphical representation 200 can include only one of the departure time 210 and the arrival time 212. As an additional example, the additional information 216 can include a hyperlink to another location where additional information can be found. As a further example, the graphical representation 200 can include additional information such as explanations of why various routes are invalid, waypoints associated with particular routes, etc.

In some implementations, the graphical representation 200 can be generated by one or more components of the system 100 of FIG. 1. For example, the processor(s) 106, the indication generator 116, the visual indication generator 124, or some combination thereof can be configured to generate the graphical representation 200 for a user.

FIG. 3 depicts an example dashboard interface 300 for a user including a first visual representation 314 of a count of a first set of flights for which all of the set of viable routes are valid, a second visual representation 312 of a count of a second set of flights for which some of the set of viable routes are valid, and a third visual representation 310 of a count of a third set of flights for which none of the set of viable routes are valid, in accordance with some implementations of the subject disclosure.

The example dashboard interface 300 includes three sets of information 302 indicating that a count 308 of planned flights were analyzed for a particular operation day 318. Each set of information 302 includes the count 308 for that operation day 318, the first visual representation 314, the second visual representation 312, and the third visual representation 310. For example, on Operation Day 1 (e.g., as indicated at 318A), 2,871 flights were analyzed (e.g., at 308A). Of those 2,871 flights, 12.5% had a set of associated preconfigured routes that were all valid (e.g., at 314A), 40.0% had a set of associated preconfigured routes of which at least one was valid (e.g., at 312A), and 47.5% had a set of preconfigured routes, all of which were invalid (e.g., at 310A). As conditions change over time, the number of valid routes can change, as indicated by the sets of information 302B, 302C, which take place on operation days following Operation Day 1 (e.g., as indicated at 318B, 318C).

A technical advantage of providing the dashboard interface is that it allows a user to more efficiently understand the state of valid routes for a set of planned flights. By making the process more efficient, flight planners can make more data-driven, efficient decisions about which routes to include in a flight plan. As noted above with reference to FIG. 1, by improving the number of flight plans rejected for including an invalid route, the overall efficiency of flight planning is improved. This can result in, for example, reduced flight delay time.

In some implementations, the dashboard interface 300 can be generated by one or more components of the system 100 of FIG. 1. For example, the processor(s) 106, the indication generator 116, the visual indication generator 124, or some combination thereof can be configured to generate the dashboard interface 300 for a user.

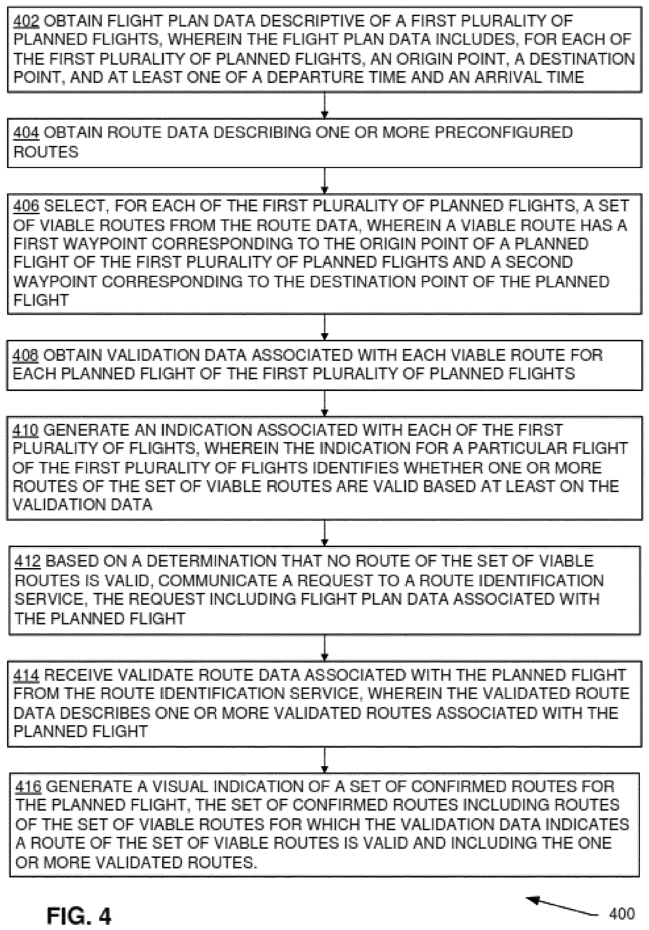

FIG. 4 is a flow chart of an example method 400 for flight plan validation and automated route improvement, in accordance with some examples of the subject disclosure. The method 400 can be initiated, performed, or controlled by one or more processors executing instructions, such as by the processor(s) 106 of FIG. 1 executing instructions from the memory 109.

In some implementations, the method 400 includes, at 402, obtaining flight plan data descriptive of a first plurality of planned flights, wherein the flight plan data includes, for each of the first plurality of planned flights, an origin point, a destination point, and at least one of a departure time and an arrival time. For example, the processor(s) 106 of FIG. 1 can obtain the flight plan data 136 descriptive of a first plurality of planned flights, wherein the flight plan data 136 includes, for each of the first plurality of planned flights, an origin point 138, a destination point 140, and at least one of a departure time 142 and an arrival time 144.

In the example of FIG. 4, the method 400 can also include, at 404, obtaining route data describing one or more preconfigured routes. For example, the processor(s) 106 of FIG. 1 can obtain the route data 146 describing one or more preconfigured routes 148.

In the example of FIG. 4, the method 400 can also include, at 406, selecting (406), for each of the first plurality of planned flights, a set of viable routes from the route data, wherein a viable route has a first waypoint corresponding to the origin point of a planned flight of the first plurality of planned flights and a second waypoint corresponding to the destination point of the planned flight. For example, the processor(s) 106 of FIG. 1 can select, for each of the first plurality of planned flights, a set of viable routes 110 from the route data, wherein a viable route has a first waypoint 112 corresponding to the origin point of a planned flight of the first plurality of planned flights and a second waypoint 114 corresponding to the destination point of the planned flight.

In the example of FIG. 4, the method 400 can also include, at 408, obtaining validation data associated with each viable route for each planned flight of the first plurality of planned flights. For example, the processor(s) 106 of FIG. 1 can obtain the validation data 128 associated with each viable route 110 for each planned flight of the first plurality of planned flights.

In the example of FIG. 4, the method 400 can also include, at 410, generating an indication associated with each of the first plurality of planned flights, wherein the indication for a particular planned flight of the first plurality of planned flights identifies whether one or more routes of the set of viable routes are valid based at least on the validation data. For example, the processor(s) 106 of FIG. 1 can generate the indication 118 associated with each of the first plurality of planned flights, wherein the indication 118 for a particular planned flight of the first plurality of planned flights identifies whether one or more routes of the set of viable routes 110 are valid based at least on the validation data 128.

In the example of FIG. 4, the method 400 can also include, at 412, based on a determination that no route of the set of viable routes is valid, communicating a request to a route identification service, the request including flight plan data associated with the planned flight. For example, the processor(s) 106 of FIG. 1 can, based on the determination 122 that no route of the set of viable routes 110 is valid, communicate the request 150 to the route identification service 104, the request 150 including the flight plan data 136 associated with the planned flight.

In the example of FIG. 4, the method 400 can also include, at 414, receiving validated route data associated with the planned flight from the route identification service, wherein the validated route data describes one or more validated routes associated with the planned flight. For example, the processor(s) 106 of FIG. 1 can receive the validated route data 152 associated with the planned flight from the route identification service 104, wherein the validated route data 152 describes one or more validated routes 139 associated with the planned flight.

In the example of FIG. 4, the method 400 can also include, at 416, generating a visual indication of a set of confirmed routes for the planned flight, the set of confirmed routes including routes of the set of viable routes for which the validation data indicates a route of the set of viable routes is valid and including the one or more validated routes. For example, the processor(s) 106 of FIG. 1 can generate a visual indication 126 of the set of confirmed routes 130 for the planned flight, the set of confirmed routes 130 including routes of the set of viable routes 110 for which the validation data 128 indicates a route of the set of viable routes 110 is valid and including the one or more validated routes.

More, fewer, and/or different steps can be included in the method 400 without departing from the scope of the subject disclosure. For example, the method 400 can obtain route data for a first subset of the first plurality of planned flights and validate the preconfigured routes for the first subset before obtaining route data for a second subset of the first plurality of planned flights and validating the preconfigured routes for the second subset.

As another example, in a particular aspect, various portions of the method 400 can be repeated for a second plurality of flights. For example, the first plurality of flights can be associated with a first airline and the second plurality of flights can be associated with a second airline. After analyzing the preconfigured routes for each of the first plurality of flights and the second plurality of flights, the method 400 can optionally include generating a dashboard interface for a user, where the dashboard interface includes one or more visual representations comparing the validation data associated with the first plurality of flights to the validation data associated with the second plurality of flights.

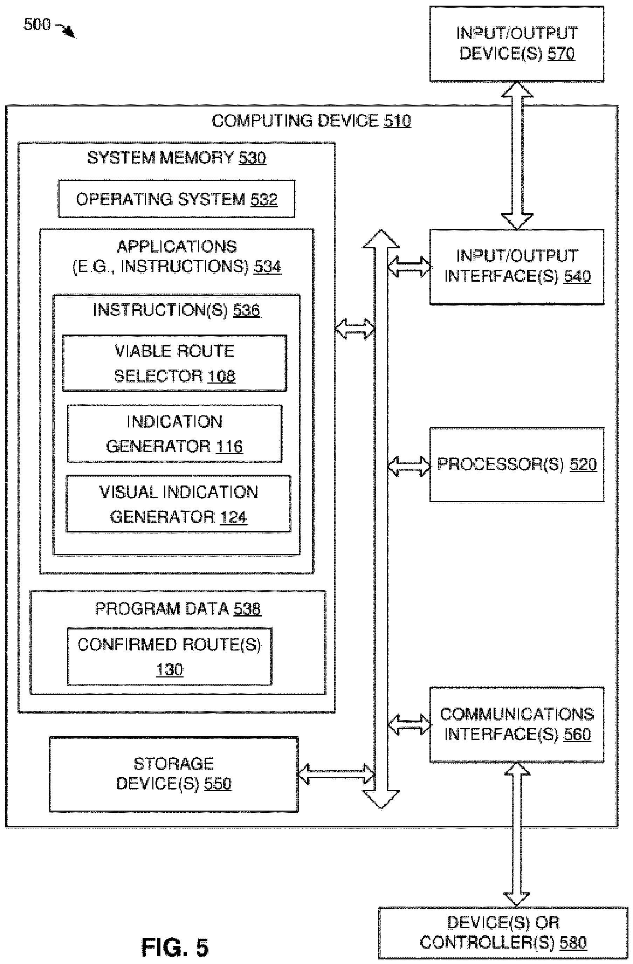

FIG. 5 is a block diagram of a computing environment 500 including a computing device 510 configured to support aspects of computer-implemented methods and computer-executable program instructions (or code), in accordance with some examples of the subject disclosure. For example, the computing device 510, or portions thereof, is configured to execute instructions to initiate, perform, or control one or more operations described in more detail above with reference to FIGS. 1-4. In a particular aspect, the computing device 510 can include, correspond to, or be included within the computing device 102, the route identification service 104, the flight plan data source 137, the route data source 147, the validation data source 127 of FIG. 1, one or more servers, one or more virtual devices, or a combination thereof.

The computing device 510 includes one or more processors 520. In a particular aspect, the processor(s) 520 correspond to the processor(s) 106 of FIG. 1. The processor(s) 520 are configured to communicate with system memory 530, one or more storage devices 550, one or more input/output interfaces 540, one or more communications interfaces 560, or any combination thereof. The system memory 530 includes volatile memory devices (e.g., random access memory (RAM) devices), nonvolatile memory devices (e.g., read-only memory (ROM) devices, programmable read-only memory, and flash memory), or both. The system memory 530 stores an operating system 532, which can include a basic input/output system for booting the computing device 510 as well as a full operating system to enable the computing device 510 to interact with users, other programs, and other devices. The system memory 530 stores system (program) data 538, such as the confirmed route(s) 130 of FIG. 1.

The system memory 530 includes one or more applications 534 (e.g., sets of instructions) executable by the processor(s) 520. As an example, the one or more applications 534 include the instructions 536 executable by the processor(s) 520 to initiate, control, or perform one or more operations described with reference to FIGS. 1-4. To illustrate, the one or more applications 534 include the instructions 536 executable by the processor(s) 520 to initiate, control, or perform one or more operations described with reference to selecting the set of viable routes 110 of FIG. 1, generating the indication 118, and generating the visual indication 126.

In a particular implementation, the system memory 530 includes a non-transitory, computer readable medium (e.g., a computer-readable storage device) storing the instructions 536 that, when executed by the processor(s) 520, cause the processor(s) 520 to initiate, perform, or control operations for flight plan validation and automated route improvement. The operations include obtaining flight plan data descriptive of a first plurality of planned flights, wherein the flight plan data includes, for each of the first plurality of planned flights, an origin point, a destination point, and at least one of a departure time and an arrival time. The operations also include obtaining route data describing one or more preconfigured routes. The operations also include selecting, for each of the first plurality of planned flights, a set of viable routes from the route data, wherein a viable route has a first waypoint corresponding to the origin point of a planned flight of the first plurality of planned flights and a second waypoint corresponding to the destination point of the planned flight. The operations also include obtaining validation data associated with each viable route for each planned flight of the first plurality of planned flights. The operations also include generating an indication associated with each of the first plurality of planned flights, wherein the indication for a particular planned flight of the first plurality of planned flights identifies whether one or more routes of the set of viable routes are valid based at least on the validation data. The operations also include, based on a determination that no route of the set of viable routes is valid, communicating a request to a route identification service, the request including flight plan data associated with the planned flight. The operations also include receiving validated route data associated with the planned flight from the route identification service, wherein the validated route data describes one or more validated routes associated with the planned flight. The operations also include generating a visual indication of a set of confirmed routes for the planned flight, the set of confirmed routes including routes of the set of viable routes for which the validation data indicates a route of the set of viable routes is valid and including the one or more validated routes.

The one or more storage devices 550 include nonvolatile storage devices, such as magnetic disks, optical disks, or flash memory devices. In a particular example, the storage devices 550 include both removable and non-removable memory devices. The storage devices 550 are configured to store an operating system, images of operating systems, applications (e.g., one or more of the applications 534), and program data (e.g., the program data 538). In a particular aspect, the system memory 530, the storage devices 550, or both, include tangible computer-readable media. In a particular aspect, one or more of the storage devices 550 are external to the computing device 510.

The one or more input/output interfaces 540 enable the computing device 510 to communicate with one or more input/output devices 570 to facilitate user interaction. For example, the one or more input/output interfaces 540 can include a display interface, an input interface, or both. For example, the input/output interface 540 is adapted to receive input from a user, to receive input from another computing device, or a combination thereof. In some implementations, the input/output interface 540 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device(s) 570 include one or more user interface devices and displays, including some combination of buttons, keyboards, pointing devices, displays, speakers, microphones, touch screens, and other devices. In a particular configuration, the input/output device(s) 570 can be configured to display the graphical representation 200 of FIG. 2, the dashboard interface 300 of FIG. 3, or some combination thereof.

The processor(s) 520 are configured to communicate with devices or controllers 580 via the one or more communications interfaces 560. For example, the one or more communications interfaces 560 can include a network interface. The devices or controllers 580 can include, for example, the route identification service 104, the flight plan data source 137, the route data source 147, the validation data source 127 of FIG. 1, or some combination thereof.

In some implementations, a non-transitory, computer readable medium (e.g., a computer-readable storage device) stores instructions that, when executed by one or more processors, cause the one or more processors to initiate, perform, or control operations to perform part of or all the functionality described above. For example, the instructions can be executable to implement one or more of the operations or methods of FIGS. 1 and 4. In some implementations, part or all of one or more of the operations or methods of FIGS. 1 and 4 can be implemented by one or more processors (e.g., one or more central processing units (CPUs), one or more graphics processing units (GPUs), one or more digital signal processors (DSPs)) executing instructions, by dedicated hardware circuitry, or any combination thereof.

In conjunction with the described implementations, an apparatus includes means for obtaining flight plan data descriptive of a first plurality of planned flights, wherein the flight plan data includes, for each of the first plurality of planned flights, an origin point, a destination point, and at least one of a departure time and an arrival time. For example, the means for obtaining the flight plan data includes the computing device 102, the processor(s) 106, the route identification service(s) 104, flight plan data source 137 of FIG. 1, one or more other circuits or components configured to obtain flight plan data descriptive of a first plurality of planned flights, wherein the flight plan data includes, for each of the first plurality of planned flights, an origin point, a destination point, and at least one of a departure time and an arrival time, or any combination thereof

The device also includes means for obtaining route data describing one or more preconfigured routes. For example, the means for obtaining the route data describing one or more preconfigured routes includes the computing device 102, the processor(s) 106, the route data source 147 of FIG. 1, one or more circuits or components configured to obtain route data describing one or more preconfigured routes, or any combination thereof.

The device also includes means for selecting, for each of the first plurality of planned flights, a set of viable routes from the route data, wherein a viable route has a first waypoint corresponding to the origin point of a planned flight of the first plurality of planned flights and a second waypoint corresponding to the destination point of the planned flight. For example, the means for selecting, for each of the first plurality of planned flights, a set of viable routes from the route data, wherein a viable route has a first waypoint corresponding to the origin point of a planned flight of the first plurality of planned flights and a second waypoint corresponding to the destination point of the planned flight includes the computing device 102, the processor(s) 106, the viable route selector 108 of FIG. 1, one or more circuits or components configured to select, for each of the first plurality of planned flights, a set of viable routes from the route data, wherein a viable route has a first waypoint corresponding to the origin point of a planned flight of the first plurality of planned flights and a second waypoint corresponding to the destination point of the planned flight, or any combination thereof.

The device also includes means for obtaining validation data associated with each viable route for each planned flight of the first plurality of planned flights. For example, the means for obtaining validation data associated with each viable route for each planned flight of the first plurality of planned flights includes the computing device 102, the processor(s) 106, the validation data source 127 of FIG. 1, one or more circuits or components configured to obtain validation data associated with each viable route for each planned flight of the first plurality of planned flights, or any combination thereof.

The device also includes means for generating an indication associated with each of the first plurality of planned flights, wherein the indication for a particular planned flight of the first plurality of planned flights identifies whether one or more routes of the set of viable routes are valid based at least on the validation data. For example, the means for generating the indication includes the computing device 102, the processor(s) 106, indication generator 116 of FIG. 1, one or more circuits or components configured to generate an indication associated with each of the first plurality of planned flights, wherein the indication for a particular planned flight of the first plurality of planned flights identifies whether one or more routes of the set of viable routes are valid based at least on the validation data, or any combination thereof.

The device also includes means for, based on a determination that no route of the set of viable routes is valid, communicating a request to a route identification service, the request including flight plan data associated with the planned flight. For example, the means for communicating the request includes the computing device 102, the processor(s) 106, of FIG. 1, one or more circuits or components configured to, based on a determination that no route of the set of viable routes is valid, communicating a request to a route identification service, the request including flight plan data associated with the planned flight, or any combination thereof.

The device also includes means for receiving validated route data associated with the planned flight from the route identification service, wherein the validated route data describes one or more validated routes associated with the planned flight. For example, the means for receiving the validated route data includes the computing device 102, the processor(s) 106, the route identification service 104 of FIG. 1, one or more circuits or components configured to receive validated route data associated with the planned flight from the route identification service, wherein the validated route data describes one or more validated routes associated with the planned flight, or any combination thereof.

The device also includes means for generating a visual indication of a set of confirmed routes for the planned flight, the set of confirmed routes including routes of the set of viable routes for which the validation data indicates a route of the set of viable routes is valid and including the one or more validated routes. For example, the means for generating the visual indication includes the computing device 102, the processor(s) 106, the visual indication generator 124 of FIG. 1, one or more circuits or components configured to generate a visual indication of a set of confirmed routes for the planned flight, the set of confirmed routes including routes of the set of viable routes for which the validation data indicates a route of the set of viable routes is valid and including the one or more validated routes, or any combination thereof.

The illustrations of the examples described herein are intended to provide a general understanding of the structure of the various implementations. The illustrations are not intended to serve as a complete description of all of the elements and features of apparatus and systems that utilize the structures or methods described herein. Many other implementations can be apparent to those of skill in the art upon reviewing the disclosure. Other implementations can be utilized and derived from the disclosure, such that structural and logical substitutions and changes can be made without departing from the scope of the disclosure. For example, method operations can be performed in a different order than shown in the figures or one or more method operations can be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results can be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features can be grouped together or described in a single implementation for the purpose of streamlining the disclosure. Examples described above illustrate but do not limit the disclosure. It should also be understood that numerous modifications and variations are possible in accordance with the principles of the subject disclosure. As the following claims reflect, the claimed subject matter can be directed to less than all of the features of any of the disclosed examples. Accordingly, the scope of the disclosure is defined by the following claims and their equivalents.

Further, the disclosure comprises embodiments according to the following examples:
According to Example 1, a method includes obtaining flight plan data descriptive of a first plurality of planned flights, wherein the flight plan data includes, for each of the first plurality of planned flights, an origin point, a destination point, and at least one of a departure time and an arrival time; obtaining route data describing one or more preconfigured routes; selecting, for each of the first plurality of planned flights, a set of viable routes from the route data, wherein a viable route has a first waypoint corresponding to the origin point of a planned flight of the first plurality of planned flights and a second waypoint corresponding to the destination point of the planned flight; obtaining validation data associated with each viable route for each planned flight of the first plurality of planned flights; generating an indication associated with each of the first plurality of planned flights, wherein the indication for a particular planned flight of the first plurality of planned flights identifies whether one or more routes of the set of viable routes are valid based at least on the validation data; based on a determination that no route of the set of viable routes is valid, communicating a request to a route identification service, the request including flight plan data associated with the planned flight; receiving validated route data associated with the planned flight from the route identification service, wherein the validated route data describes one or more validated routes associated with the planned flight; and generating a visual indication of a set of confirmed routes for the planned flight, the set of confirmed routes including routes of the set of viable routes for which the validation data indicates a route of the set of viable routes is valid and including the one or more validated routes.
Example 2 includes the method of Example 1, further comprising generating one or more key performance indicators for each of the set of confirmed routes.
Example 3 includes the method of Example 2, wherein a particular key performance indicator of the one or more key performance indicators is a fuel usage metric.
Example 4 includes the method of Example 2 or Example 3, wherein a particular key performance indicator of the one or more key performance indicators is a departure time delay metric.
Example 5 includes the method of any of Examples 1 to 4, wherein at least one of the one or more validated routes has been validated based at least on a route rejection criterion associated with the validation data.
Example 6 includes the method of Example 5, wherein the route rejection criterion indicates that a waypoint of the particular route no longer exists.
Example 6bis includes the method of Example 6 wherein a standard instrument departure at the origin point is closed, traffic is forbidden for a portion of the particular route, traffic is closed for a portion of the particular route, or a portion of the particular route cannot be flown at a desired flight level.
Example 7 includes the method of Example 5 or Example 6 or Example 6bis, wherein the route rejection criterion indicates that a standard instrument departure at the origin point is closed.
Example 8 includes the method of any of Examples 5 to 7, wherein the route rejection criterion indicates that traffic is forbidden for a portion of the particular route.
Example 9 includes the method of any of Examples 5 to 8, wherein the route rejection criterion indicates that traffic is closed for a portion of the particular route.
Example 10 includes the method of any of Examples 5 to 9, wherein the route rejection criterion indicates that a portion of the particular route cannot be flown at a desired flight level.
Example 11 includes the method of any of Examples 1 to 10, wherein the indication comprises a visual indication, the visual indication including a first color indicating that all of the one or more routes are valid, a second color indicating that some of the one or more routes are valid, or a third color indicating that none of the one or more routes is valid.
Example 12 includes the method of any of Examples 1 to 11 and further includes communicating a message including a text explanation associated with the validation data.
Example 13 includes the method of any of Examples 1 to 12 and further includes generating a dashboard interface for a user, the dashboard interface including one or more visual representations associated with the validation data of each of the one or more routes for each of the first plurality of planned flights.
Example 14 includes the method of Example 13, wherein the one or more visual representations includes a first visual representation of a count of a first set of flights for which all of the set of viable routes are valid, a second visual representation of a count of a second set of flights for which some of the set of viable routes are valid, and a third visual representation of a count of a third set of flights for which none of the set of viable routes are valid.
Example 15 includes the method of any of Examples 1 to 14, wherein the first plurality of planned flights are associated with a first airline, and wherein the method further includes obtaining flight plan data indicating a second plurality of planned flights associated with a second airline, each of the second plurality of planned flights including an origin point, a destination point, and at least one of a departure time and an arrival time; and selecting, for each of the second plurality of planned flights, a second set of viable routes from the route data, wherein a viable route has a first waypoint corresponding to the origin point of a planned flight of the second plurality of planned flights and a second waypoint corresponding to the destination point of the planned flight of the second plurality of planned flights; obtaining validation data associated each viable route for each planned flight of the second plurality of planned flights; generating an indication associated with each of the second plurality of planned flights, wherein the indication for a particular flight of the second plurality of planned flights identifies whether one or more routes of the set of viable routes are valid based at least on the validation data; based on a determination that no route of the second set of viable routes is valid, communicating a request to the route identification service, the request including flight plan data associated with the planned flight of the second plurality of planned flights; receiving validated route data associated with the planned flight of the second plurality of planned flights from the route identification service, wherein the validated route data describes one or more validated routes associated with the planned flight of the second plurality of planned flights; and generating a visual indication of a second set of confirmed routes for the planned flight of the second plurality of planned flights, the set of confirmed routes including routes of the set of viable routes for which the validation data indicates a route of the second set of viable routes is valid and including the one or more validated routes associated with the second plurality of planned flights.
Example 16 includes the method of Example 15 and further includes generating a dashboard interface for a user, the dashboard interface including one or more visual representations associated with the validation data of each of the one or more routes for each of the first plurality of planned flights and each of the second plurality of planned flights.
Example 17 includes the method of Example 16, wherein the dashboard interface includes one or more visual representations comparing the validation data associated with the first plurality of planned flights to the validation data associated with the second plurality of planned flights.
According to Example 18, a system includes a memory; and one or more processors configured to obtain flight plan data descriptive of a first plurality of planned flights, wherein the flight plan data includes, for each of the first plurality of planned flights, an origin point, a destination point, and at least one of a departure time and an arrival time; obtain route data describing one or more preconfigured routes; select, for each of the first plurality of planned flights, a set of viable routes from the route data, wherein a viable route has a first waypoint corresponding to the origin point of a planned flight of the first plurality of planned flights and a second waypoint corresponding to the destination point of the planned flight; obtain validation data associated with each viable route for each planned flight of the first plurality of planned flights; generate an indication associated with each of the first plurality of planned flights, wherein the indication for a particular planned flight of the first plurality of planned flights identifies whether one or more routes of the set of viable routes are valid based at least on the validation data; based on a determination that no route of the set of viable routes is valid, communicate a request to a route identification service, the request including flight plan data associated with the planned flight; receive validated route data associated with the planned flight from the route identification service, wherein the validated route data describes one or more validated routes associated with the planned flight; and generate a visual indication of a set of confirmed routes for the planned flight, the set of confirmed routes including routes of the set of viable routes for which the validation data indicates a route of the set of viable routes is valid and including the one or more validated routes.
Example 19 includes the system of Example 18, wherein the one or more processors are further configured to generate one or more key performance indicators for each of the set of confirmed routes.
Example 20 includes the system of Example 19, wherein a particular key performance indicator of the one or more key performance indicators is a fuel usage metric.
Example 21 includes the system of Example 19 or Example 20, wherein a particular key performance indicator of the one or more key performance indicators is a departure time delay metric.
Example 22 includes the system of any of Examples 18 to 21, wherein at least one of the one or more validated routes has been validated based at least on a route rejection criterion associated with the validation data.
Example 23 includes the system of Example 22, wherein the route rejection criterion indicates that a waypoint of the particular route no longer exists.
Example 24 includes the system of Example 22 or Example 23, wherein the route rejection criterion indicates that a standard instrument departure at the origin point is closed.
Example 25 includes the system of any of Examples 22 to 24, wherein the route rejection criterion indicates that traffic is forbidden for a portion of the particular route.
Example 26 includes the system of any of Examples 22 to 25, wherein the route rejection criterion indicates that traffic is closed for a portion of the particular route.
Example 27 includes the system of any of Examples 22 to 26, wherein the route rejection criterion indicates that a portion of the particular route cannot be flown at a desired flight level.
Example 28 includes the system of any of Examples 18 to 27, wherein the indication comprises a visual indication, the visual indication including a first color indicating that all of the one or more routes are valid, a second color indicating that some of the one or more routes are valid, or a third color indicating that none of the one or more routes is valid.
Example 29 includes the system of any of Examples 18 to 28, wherein the one or more processors are further configured to communicate a message including a text explanation associated with the validation data.
Example 30 includes the system of any of Examples 18 to 29, wherein the one or more processors are further configured to generate a dashboard interface for a user, the dashboard interface including one or more visual representations associated with the validation data of each of the one or more routes for each of the first plurality of flights or planned flights.
Example 31 includes the system of Example 30, wherein the one or more visual representations includes a first visual representation of a count of a first set of flights for which all of the set of viable routes are valid, a second visual representation of a count of a second set of flights for which some of the set of viable routes are valid, and a third visual representation of a count of a third set of flights for which none of the set of viable routes are valid.
Example 32 includes the system of any of Examples 18 to 31, wherein the first plurality of planned flights are associated with a first airline, and wherein the one or more processors are further configured to obtain flight plan data indicating a second plurality of planned flights associated with a second airline, each of the second plurality of planned flights including an origin point, a destination point, and at least one of a departure time and an arrival time; and select, for each of the second plurality of planned flights, a second set of viable routes from the route data, wherein a viable route has a first waypoint corresponding to the origin point of a planned flight of the second plurality of planned flights and a second waypoint corresponding to the destination point of the planned flight of the second plurality of planned flights; obtain validation data associated each viable route for each planned flight of the second plurality of planned flights; generate an indication associated with each of the second plurality of planned flights, wherein the indication for a particular flight of the second plurality of planned flights identifies whether one or more routes of the set of viable routes are valid based at least on the validation data; based on a determination that no route of the second set of viable routes is valid, communicate a request to the route identification service, the request including flight plan data associated with the planned flight of the second plurality of planned flights; receive validated route data associated with the planned flight of the second plurality of planned flights from the route identification service, wherein the validated route data describes one or more validated routes associated with the planned flight of the second plurality of planned flights; and generate a visual indication of a second set of confirmed routes for the planned flight of the second plurality of planned flights, the set of confirmed routes including routes of the set of viable routes for which the validation data indicates a route of the second set of viable routes is valid and including the one or more validated routes associated with the second plurality of planned flights.
Example 33 includes the system of Example 32, wherein the one or more processors are further configured to generate a dashboard interface for a user, the dashboard interface including one or more visual representations associated with the validation data of each of the one or more routes for each of the first plurality of planned flights and each of the second plurality of planned flights.
Example 34 includes the system of Example 33, wherein the dashboard interface includes one or more visual representations comparing the validation indications associated with the first plurality of planned flights to the validation data associated with the second plurality of planned flights.
According to Example 35, a non-transitory computer-readable medium comprising instructions that, when executed by one or more processors, cause the one or more processors to obtain flight plan data descriptive of a first plurality of planned flights, wherein the flight plan data includes, for each of the first plurality of planned flights, an origin point, a destination point, and at least one of a departure time and an arrival time; obtain route data describing one or more preconfigured routes; select, for each of the first plurality of planned flights, a set of viable routes from the route data, wherein a viable route has a first waypoint corresponding to the origin point of a planned flight of the first plurality of planned flights and a second waypoint corresponding to the destination point of the planned flight; obtain validation data associated with each viable route for each planned flight of the first plurality of planned flights; generate an indication associated with each of the first plurality of planned flights, wherein the indication for a particular planned flight of the first plurality of planned flights identifies whether one or more routes of the set of viable routes are valid based at least on the validation data; based on a determination that no route of the set of viable routes is valid, communicate a request to a route identification service, the request including flight plan data associated with the planned flight; receive validated route data associated with the planned flight from the route identification service, wherein the validated route data describes one or more validated routes associated with the planned flight; and generate a visual indication of a set of confirmed routes for the planned flight, the set of confirmed routes including routes of the set of viable routes for which the validation data indicates a route of the set of viable routes is valid and including the one or more validated routes.
Example 36 includes the non-transitory computer-readable medium of Example 35, wherein the instructions, when executed by the one or more processors, further cause the one or more processors to generate one or more key performance indicators for each of the set of confirmed routes.
Example 37 includes the non-transitory computer-readable medium of Example 36, wherein a particular key performance indicator of the one or more key performance indicators is a fuel usage metric.
Example 38 includes the non-transitory computer-readable medium of Example 36 or Example 37, wherein a particular key performance indicator of the one or more key performance indicators is a departure time delay metric.
Example 39 includes the non-transitory computer-readable medium of any of Examples 35 to 38, wherein at least one of the one or more validated routes has been validated based at least on a route rejection criterion associated with the validation data.
Example 40 includes the non-transitory computer-readable medium of Example 39, wherein the route rejection criterion indicates that a waypoint of the particular route no longer exists.
Example 41 includes the non-transitory computer-readable medium of Example 39 or Example 40, wherein the route rejection criterion indicates that a standard instrument departure at the origin point is closed.
Example 42 includes the non-transitory computer-readable medium of any of Examples 39 to 41, wherein the route rejection criterion indicates that traffic is forbidden for a portion of the particular route.
Example 43 includes the non-transitory computer-readable medium of any of Examples 39 to 42, wherein the route rejection criterion indicates that traffic is closed for a portion of the particular route.
Example 44 includes the non-transitory computer-readable medium of any of Examples 39 to 43, wherein the route rejection criterion indicates that a portion of the particular route cannot be flown at a desired flight level.
Example 45 includes the non-transitory computer-readable medium of any of Examples 35 to 44, wherein the indication comprises a visual indication, the visual indication including a first color indicating that all of the one or more routes are valid, a second color indicating that some of the one or more routes are valid, or a third color indicating that none of the one or more routes is valid.
Example 46 includes the non-transitory computer-readable medium of any of Examples 35 to 45, wherein the instructions, when executed by the one or more processors, further cause the one or more processors to communicate a message including a text explanation associated with the validation data.
Example 47 includes the non-transitory computer-readable medium of any of Examples 35 to 46, wherein the instructions, when executed by the one or more processors, further cause the one or more processors to generate a dashboard interface for a user, the dashboard interface including one or more visual representations associated with the validation data of each of the one or more routes for each of the first plurality of planned flights.
Example 48 includes the non-transitory computer-readable medium of Example 47, wherein the one or more visual representations includes a first visual representation of a count of a first set of flights for which all of the set of viable routes are valid, a second visual representation of a count of a second set of flights for which some of the set of viable routes are valid, and a third visual representation of a count of a third set of flights for which none of the set of viable routes are valid.
Example 49 includes the non-transitory computer-readable medium of any of Examples 35 to 48, wherein the first plurality of planned flights are associated with a first airline, and wherein the instructions, when executed by the one or more processors, further cause the one or more processors to obtain flight plan data indicating a second plurality of planned flights associated with a second airline, each of the second plurality of planned flights including an origin point, a destination point, and at least one of a departure time and an arrival time; and select, for each of the second plurality of planned flights, a second set of viable routes from the route data, wherein a viable route has a first waypoint corresponding to the origin point of a planned flight of the second plurality of planned flights and a second waypoint corresponding to the destination point of the planned flight of the second plurality of planned flights; obtain validation data associated each viable route for each planned flight of the second plurality of planned flights; generate an indication associated with each of the second plurality of planned flights, wherein the indication for a particular flight of the second plurality of planned flights identifies whether one or more routes of the set of viable routes are valid based at least on the validation data; based on a determination that no route of the second set of viable routes is valid, communicate a request to the route identification service, the request including flight plan data associated with the planned flight of the second plurality of planned flights; receive validated route data associated with the planned flight of the second plurality of planned flights from the route identification service, wherein the validated route data describes one or more validated routes associated with the planned flight of the second plurality of planned flights; and generate a visual indication of a second set of confirmed routes for the planned flight of the second plurality of planned flights, the set of confirmed routes including routes of the set of viable routes for which the validation data indicates a route of the second set of viable routes is valid and including the one or more validated routes associated with the second plurality of planned flights.
Example 50 includes the non-transitory computer-readable medium of Example 49, wherein the instructions, when executed by the one or more processors, further cause the one or more processors to generate a dashboard interface for a user, the dashboard interface including one or more visual representations associated with the validation data of each of the one or more routes for each of the first plurality of planned flights and each of the second plurality of planned flights.
Example 51 includes the non-transitory computer-readable medium of Example 50, wherein the dashboard interface includes one or more visual representations comparing the validation indications associated with the first plurality of planned flights to the validation data associated with the second plurality of planned flights.

## Claims

1. A method comprising:
obtaining flight plan data descriptive of a first plurality of planned flights, wherein the flight plan data includes, for each of the first plurality of planned flights, an origin point, a destination point, and at least one of a departure time and an arrival time;
obtaining route data describing one or more preconfigured routes;
selecting, for each of the first plurality of planned flights, a set of viable routes from the route data, wherein a viable route has a first waypoint corresponding to the origin point of a planned flight of the first plurality of planned flights and a second waypoint corresponding to the destination point of the planned flight;
obtaining validation data associated with each viable route for each planned flight of the first plurality of planned flights;
generating an indication associated with each of the first plurality of planned flights, wherein the indication for a particular planned flight of the first plurality of planned flights identifies whether one or more routes of the set of viable routes are valid based at least on the validation data;
based on a determination that no route of the set of viable routes is valid, communicating a request to a route identification service, the request including flight plan data associated with the planned flight;
receiving validated route data associated with the planned flight from the route identification service, wherein the validated route data describes one or more validated routes associated with the planned flight; and
generating a visual indication of a set of confirmed routes for the planned flight, the set of confirmed routes including routes of the set of viable routes for which the validation data indicates a route of the set of viable routes is valid and including the one or more validated routes.

2. The method of claim 1, further comprising generating one or more key performance indicators for each of the set of valid routes.

3. The method of claim 2, wherein a particular key performance indicator of the one or more key performance indicators is a fuel usage metric or a departure time delay metric.

4. The method of any one of claims 1 to 3, wherein at least one of the one or more validated routes has been validated based at least on a route rejection criterion associated with the validation data.

5. The method of claim 4, wherein the route rejection criterion indicates that a waypoint of the particular route no longer exists, a standard instrument departure at the origin point is closed, traffic is forbidden for a portion of the particular route, traffic is closed for a portion of the particular route, or a portion of the particular route cannot be flown at a desired flight level.

6. The method of any one of claims 1 to 5, wherein the indication comprises a visual indication, the visual indication including a first color indicating that all of the one or more routes are valid, a second color indicating that some of the one or more routes are valid, or a third color indicating that none of the one or more routes is valid.

7. The method of any one of claims 1 to 6, further comprising communicating a message including a text explanation associated with the validation data.

8. The method of any one of claims 1 to 7, further comprising generating a dashboard interface for a user, the dashboard interface including one or more visual representations associated with the validation data of each of the one or more routes for each of the first plurality of flights.

9. The method of claim 8, wherein the one or more visual representations includes a visual representation of a count of a first set of flights for which all of the set of viable routes are valid, a count of a second set of flights for which some of the set of viable routes are valid, and a count a third set of flights for which none of the set of viable routes are valid.

10. The method of any one of claims 1 to 9, wherein the first plurality of planned flights are associated with a first airline, and wherein the method further comprises:
obtaining flight plan data indicating a second plurality of planned flights associated with a second airline, each of the second plurality of planned flights including an origin point, a destination point, and at least one of a departure time and an arrival time; and
selecting, for each of the second plurality of planned flights, a second set of viable routes from the route data, wherein a viable route has a first waypoint corresponding to the origin point of a planned flight of the second plurality of planned flights and a second waypoint corresponding to the destination point of the planned flight of the second plurality of planned flights;
obtaining validation data associated with each viable route for each planned flight of the second plurality of planned flights;
generating an indication associated with each of the second plurality of planned flights, wherein the indication for a particular flight of the second plurality of planned flights identifies whether one or more routes of the set of viable routes are valid based at least on the validation data;
based on a determination that no route of the second set of viable routes is valid, communicating a request to the route identification service, the request including flight plan data associated with the planned flight of the second plurality of planned flights;
receiving validated route data associated with the planned flight of the second plurality of planned flights from the route identification service, wherein the validated route data describes one or more validated routes associated with the planned flight of the second plurality of planned flights; and
generating a visual indication of a second set of confirmed routes for the planned flight of the second plurality of planned flights, the set of confirmed routes including routes of the set of viable routes for which the validation data indicates a route of the second set of viable routes is valid and including the one or more validated routes associated with the second plurality of planned flights.

11. The method of claim 10, further comprising generating a dashboard interface for a user, the dashboard interface including one or more visual representations associated with the validation data of each of the one or more routes for each of the first plurality of flights and each of the second plurality of flights.

12. The method of claim 11, wherein the dashboard interface includes one or more visual representations comparing the validation data associated with the first plurality of flights to the validation data associated with the second plurality of flights.

13. A system comprising:
a memory; and
one or more processors configured to:
obtain flight plan data descriptive of a first plurality of planned flights, wherein the flight plan data includes, for each of the first plurality of planned flights, an origin point, a destination point, and at least one of a departure time and an arrival time;
obtain route data describing one or more preconfigured routes;
select, for each of the first plurality of planned flights, a set of viable routes from the route data, wherein a viable route has a first waypoint corresponding to the origin point of a planned flight of the first plurality of planned flights and a second waypoint corresponding to the destination point of the planned flight;
obtain validation data associated with each viable route for each planned flight of the first plurality of planned flights;
generate an indication associated with each of the first plurality of planned flights, wherein the indication for a particular planned flight of the first plurality of planned flights identifies whether one or more routes of the set of viable routes are valid based at least on the validation data;
based on a determination that no route of the set of viable routes is valid, communicate a request to a route identification service, the request including flight plan data associated with the planned flight;
receive validated route data associated with the planned flight from the route identification service, wherein the validated route data describes one or more validated routes associated with the planned flight; and
generate a visual indication of a set of confirmed routes for the planned flight, the set of confirmed routes including routes of the set of viable routes for which the validation data indicates a route of the set of viable routes is valid and including the one or more validated routes.

14. The system of claim 13, wherein at least one of the one or more validated routes has been validated based at least on a route rejection criterion associated with the validation data.

15. A non-transitory computer-readable medium comprising instructions that, when executed by one or more processors, cause the one or more processors to carry out the method of any one of claims 1 to 12.
